# EUROPÄISCHE PATENTSCHRIFT

(11) **EP 0 434 922 B1**
(45) Veröffentlichungstag und Bekanntmachung des Hinweises auf die Patenterteilung: **29.03.1995**
(21) Anmeldenummer: 90120233.3
(22) Anmeldetag: 22.10.1990
(51) Int. Cl.: G11B 23/023, G11B 33/04

(54) **Aufnahmebehälter für Magnetbandkassette**
Storage holder for magnetic tape cassette
Réceptacle d'emmagasinage pour cassette à bande magnétique

(30) Priorität: 23.12.1989 DE 3942845
(43) Veröffentlichungstag der Anmeldung: 03.07.1991
(73) Patentinhaber: fischerwerke Artur Fischer GmbH & Co. KG, D-72178 Waldachtal (DE)
(72) Erfinder: Stephan, Christoph, W-7244 Waldachtal 3/Tumlingen (DE)

(56) Entgegenhaltungen:
- EP-A- 0 163 221
- EP-A- 0 287 314
- WO-A-87/02558
- FR-A- 2 627 889
- GB-A- 2 102 768

## Beschreibung

Die Erfindung betrifft einen Aufnahmebehälter für Magnetbandkassetten gemäß der Gattung des Anspruches 1.

Aus der EP-A-163 221 ist ein Aufnahmebehälter für einen Aufzeichnungsträger, beispielsweise einer Magnetbandkassette, bekannt, der ein Gehäuse mit mindestens einem Transportschieber, der gegen Federvorspannung im Gehäuse verriegelt ist, umfaßt. Die Verriegelungsanordnung wird durch eine an der Frontseite des Schiebers befindliche Taste gebildet, die gegen ein Federelement zur Betätigung eines Riegels eindrückbar ist. Das Federelement besteht aus einem elastischen Biegebalken, an dem der Riegel ausgebildet ist. Beim Drücken der Taste wird über eine Schrägfläche der Riegel angehoben und gleichzeitig das als elastischer Biegebalken ausgebildete Federelement durchgebogen. Durch das Anheben des Riegels wird der in der Schließposition befindliche Transportschieber entriegelt und mittels Federkraft in die Entnahmeposition verschoben. Nach dem Loslassen der Taste wird der Riegel über die Vorspannung des elastischen Biegebalkens wieder in die Rastposition gedrückt.

Beim Zurückschieben des Schiebers treffen am Riegel angeordnete Schrägflächen auf die Stirnkante der Gehäusebodenwand auf und drücken die Riegel gegen die Federkraft des elastischen Biegebalkens nach oben. Sobald die innere Endlage des Schiebers erreicht ist, überlaufen die Riegel entsprechende Durchbrüche in der Gehäusebodenwand, in die sie aufgrund der Federwirkung des elastischen Biegebalkens einrasten.

Diese Lösung ist insofern sehr aufwendig, da sie einen kompletten Riegelkasten mit einer Vorder- und Rückwand zur Führung und Halterung der Taste und des mit dem Riegel versehenen elastischen Biegebalkens erforderlich macht. Des weiteren ist eine Unter- und Oberseite des Riegelkastens zur Abstützung des Biegebalkens und zur Führung des Riegels erforderlich. Damit ergibt sich eine sehr aufwendige Montage der Verriegelungsanordnung, die nicht oder nur sehr schwer automatisierbar ist.

Des weiteren besteht bei der bekannten Verriegelungsanordnung die Gefahr, daß diese nicht störungsfrei arbeitet. Da sowohl die Taste als auch der elastische Biegebalken mit Riegel bei der bekannten Ausführung in einem Riegelkasten geführt und gehalten sind, können bei größeren Temperaturschwankungen und häufiger Betätigung Formveränderungen der Kunststoffteile eintreten, die ein exaktes Zusammenwirken der Teile nicht mehr gewährleisten.

Der Erfindung liegt die Aufgabe zugrunde, für einen Aufnahmebehälter der eingangs genannten Gattung eine einfache kostengünstig herstellbare und montierbare Verriegelungsanordnung zu schaffen, die auch bei ungünstigen Bedingungen eine störungsfreie Funktion gewährleistet.

Die Lösung dieser Aufgabe wird bei einem Aufnahmebehälter der eingangs genannten Gattung durch die im kennzeichnenden Teil des Hauptanspruchs angegebenen Merkmale erhalten. Aufgrund der drehelastischen Lagerung des mit der Taste in Verbindung stehenden Federelements biegt sich dieses bei Betätigen der Taste durch. Das Federelement ist dabei an zwei Punkten fixiert, so daß bei Druck auf die Taste der Riegel aus der Gehäuseöffnung zur seitlichen Begrenzung des Schiebers hin bewegt wird. Hierdurch wird der Schieber aus dem Gehäuse des Aufnahmebehälters entrastet und mittels Federkraft in eine Entnahmeposition ausgeschoben. Die Einführung des Schiebers in das Gehäuse des Aufnahmebehälters ist trotz des an der Verriegelungsanordnung befindlichen Riegels problemlos möglich, da die an diesem befindliche Schrägfläche den Riegel bei Eindringen in das Gehäuse in eine mit der seitlichen Begrenzung des Schiebers abschließende Stellung bringt. Hat der Schieber im Gehäuse des Aufnahmebehälters seine Endposition erreicht, rastet der Riegel in die ihm gegenüberliegende Öffnung der Seitenwand des Gehäuses des Aufnahmebehälters ein und verriegelt somit den Schieber im Aufnahmebehälter.

Da Reibungs- oder Kontaktflächen an der Verriegelungsanordnung nicht vorhanden sind, kann auch infolge vielfacher Betätigung der Taste ein Verschleiß an der Verriegelungsanordnung nicht auftreten.

Beim Entriegelungsvorgang wird eine Umsetzung des auf die Taste ausgeübten Drucks in eine rechtwinklig dazu stehende Entriegelungsbewegung dadurch erreicht, daß das mit der Taste in Verbindung stehende, aus einem elastischen Biegebalken bestehende Federelement sich durchbiegt. Dabei wird das Herausgleiten des Riegel aus der Gehäuseöffnung des Aufnahmebehälters sowie der formschlüssige Abschluß des Riegels mit der seitlichen Begrenzung des Schiebers dadurch ermöglicht, daß das dem Riegel gegenüberliegende Ende des Biegebalkens am Schieber drehelastisch fixiert ist und im Bereich des Riegels vom Biegebalken ein Kragträger absteht, der an einem weiterem Lageransatz am Schieber fixiert ist. Durch die drehbewegliche Fixierung des Biegebalkens an den beiden Lageransätzen wird somit die Durchbiegung des Biegebalkens ermöglicht, wobei der Riegelfortsatz während des Biegevorgangs eine zur seitlichen Begrenzung des Schiebers gerichtete Schwenkbewegung beschreibt.

Die Übertragung des auf die Taste ausgeübten Drucks auf den Biegebalken wird über einen, die Taste mit dem Biegebalken verbindenden Steg ermöglicht. Dieser trifft am Biegebalken auf den Scheitel eines an diesem ausgebildeten stumpfen Winkels, wodurch der Verlauf des Biegevorgangs vorgegeben ist.

Die Verriegelungsanordnung kann dabei in der Weise vorgesehen sein, daß die Taste mit dem Biegebalken ein Element bildet, wobei der Biegebalken im Bereich der bei den übrigen Ausführungen ausgebildeten Lageransätze am Schieber angespritzt ist. Ein zusätzlicher Montageaufwand wird hierdurch vermieden. Die Elastizität beim Biegevorgang ist dadurch ermöglicht, daß am zwischen Taste und Biegebalken angeordneten Steg ein im Durchmesser verjüngter Abschnitt vorgesehen ist, der somit für eine weitere elastische Biegemöglichkeit sorgt.

Eine vorteilhafte Weiterbildung der Erfindung sieht vor, daß der an der Taste angeordnete Steg in eine am Biegebalken ausgebildete Tastenaufnahme eingreift. Taste und Biegebalken bestehen somit aus zwei Teilen, wodurch die Möglichkeit geschaffen ist, die Taste unabhängig vom Federelement zu gestalten. Auch erleichtert dies die Austauschmöglichkeit der Teile, da sie unabhängig voneinander ersetzt werden können.

Ebenfalls können die am Biegebalken vorgesehenen Lageransätze auch in Form von Lagerzapfen ausgebildet sein, die in am Schieber angeordneten Schwenklagern drehbeweglich einliegen.

Die Verriegelungsanordnung ist somit in mehreren Bauvarianten ausführbar, die auch miteinander kombiniert werden können.

Die Erfindung wird nachfolgend anhand der Zeichnungen näher erläutert. Es zeigen:

Figur 1 einen Aufnahmebehälter für Aufzeichnungsträger mit einem in der Entnahmeposition befindlichen Schieber, räumlich dargestellt,

Figur 2 ein Ausführungsbeispiel der erfindungsgemäßen Verriegelungsanordnung von oben betrachtet, teilweise in geschnittener Form,

Figur 3 die Ausführungsform des aus Figur 2 ersichtlichen Biegebalkens in Einzeldarstellung,

Figur 4 eine weitere Ausführungsform der erfindungsgemäßen Verriegelungsanordnung mit durchgehendem Steg und

Figur 5 eine weitere Ausführungsform der erfindungsgemäßen Verriegelungsanordnung in an den Schieber angespritzter Form.

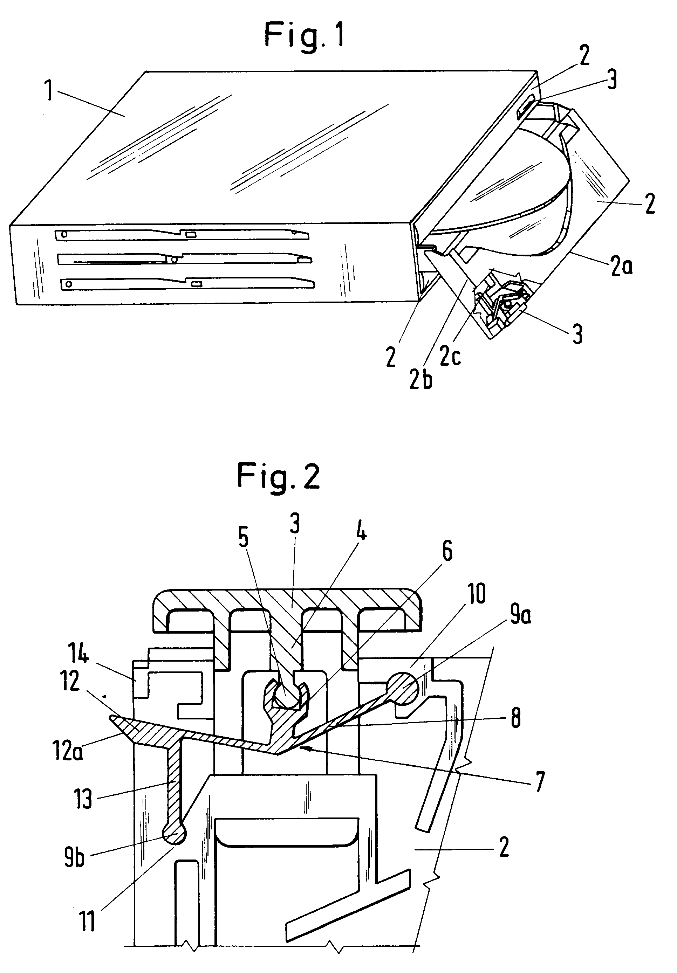

Figur 1 zeigt in räumlicher Darstellung das Gehäuse 1 eines Aufnahmebehälters für Aufzeichnungsträger wie Magnetbandkassetten, Schallplatten, Kompaktdisks oder dergleichen. In dieses sind Schieber 2 eingebracht, von denen der aus der Zeichnung ersichtliche mittige Schieber 2 in der Entnahmeposition befindlich ist. In dieser klappt der vordere Teil des Schiebers 2 nach unten und erleichtert somit die Entnahme einer darin befindlichen Kassette oder dergleichen. Die Entnahmeposition wird durch die Entriegelung des Schiebers 2 mittels einer Taste 3 am Gehäuse 1 des Aufnahmebehälters erreicht. Der im rückwärtigen Bereich einer Blende 2a gelegene Teil der Verriegelungsanordnung ist zwischen einer oberen und unteren Abdeckfläche (2b, c) angeordnet. Nach der Entriegelung wird der Schieber 2 durch eine, aus der Zeichnung nicht ersichtliche, im hinteren Bereich des Gehäuses 1 des Aufnahmebehälters befindliche Feder aus dem Gehäuse 1 herausgeschoben und in die Entnahmeposition verbracht.

In Figur 2 ist der aus Figur 1 ersichtliche Ausschnitt der Verriegelungsanordnung im Bereich der Taste 3 in vergrößerter Form dargestellt. Im mittigen Bereich der Taste 3 ist ein Steg 4 angeordnet, der bei der aus der Zeichnung ersichtlichen Ausführungsform mit einem kreisförmigen Absatz 5 in der Tastenaufnahme 6 des Federelements 7 einliegt. Das Federelement 7 weist einen Biegebalken 8 auf, der mit zwei Lageransätzen 9a, b in am Schieber 2 angeordneten Schwenklagern 10 und 11 beweglich einliegt. Das dem Lageransatz 9a gegenüberliegende Ende des Biegebalkens 8 wird durch einen Riegel 12 gebildet, an dem eine Schrägfläche 12a vorgesehen ist. Im Bereich des Riegels 12 steht ein Kragträger 13 ab, an dessen dem Riegelfortsatz 12 gegenüberliegenden Ende der Lageransatz 9b befindlich ist. Die dargestellte Ausführungsform der erfindungsgemäßen Verriegelungsanordnung weist somit die Taste 3 mit daran befindlichem Steg 4 sowie das Federelement 7 als zwei Teile aus, die mittels des in der Tastenaufnahme 6 einliegenden Ansatzes 5 miteinander beweglich verbunden sind.

Bei der die Entriegelung des Schiebers 2 auslösenden Tastenbetätigung wird die rechtwinklig dazu stehende Entriegelungsbewegungsrichtung des Riegels 12 wie folgt umgesetzt:

Durch Betätigen der Taste 3 wird der auf diese wirkende Druck über den Steg 4 und den daran angeordneten Ansatz 5 auf die Tastenaufnahme 6 und somit auf den Biegebalken 8 übertragen. Die beiden Schenkel des Biegebalkens 8 werden, auf die Zeichnung bezogen, nach unten bewegt, wodurch eine Durchbiegung des Biegebalkens 8 erreicht wird. Ermöglicht wird die Durchbiegung durch die beweglich gelagerten Lageransätze 9a, b. Während des am Biegebalken 8 stattfindenden Biegevorganges beschreibt der im Bereich des Riegels befindliche Kragträger 13 eine nach innen gerichtete Schwenkbewegung, wodurch der Riegel 12 in eine mit der seitlichen Begrenzung 14 des Schiebers 2 abschließende Position verbracht wird. Der Riegel 12 gibt somit die für die Entnahmeposition des Schiebers erforderliche Ausschubbewegung frei. In der Rastposition war diese dadurch unterbunden, daß der Riegel 12 in einer Öffnung des aus der Figur 1 ersichtlichen Gehäuses 1 des Aufnahmebehälters eingriff und somit den Schieber 2 im Gehäuse 1 verriegelte. Bei Rückführung der Taste in ihre Ruhebewegung wird schließlich der Riegel 12 wieder nach außen bewegt und in dessen Ruheposition verbracht.

Wird nun der Schieber 2 wieder in das Gehäuse 1 des Aufnahmebehälters zurückgeführt, ermöglicht die am Riegel 12 angeordnete Schrägfläche 12a eine durch den Wandbereich der Gehäuseöffnung des Gehäuses 1 ausgelöste Rückführung des Riegels 12 auf die seitliche Begrenzung 14 des Schiebers 2. Sobald der Schieber 2 im Gehäuse 1 in seine Endposition verbracht ist, gleitet der Riegel 12 wiederum in die am Gehäuse 1 befindliche Öffnung ein und verriegelt somit den Schieber 2 im Gehäuse 1 des Aufnahmebehälters.

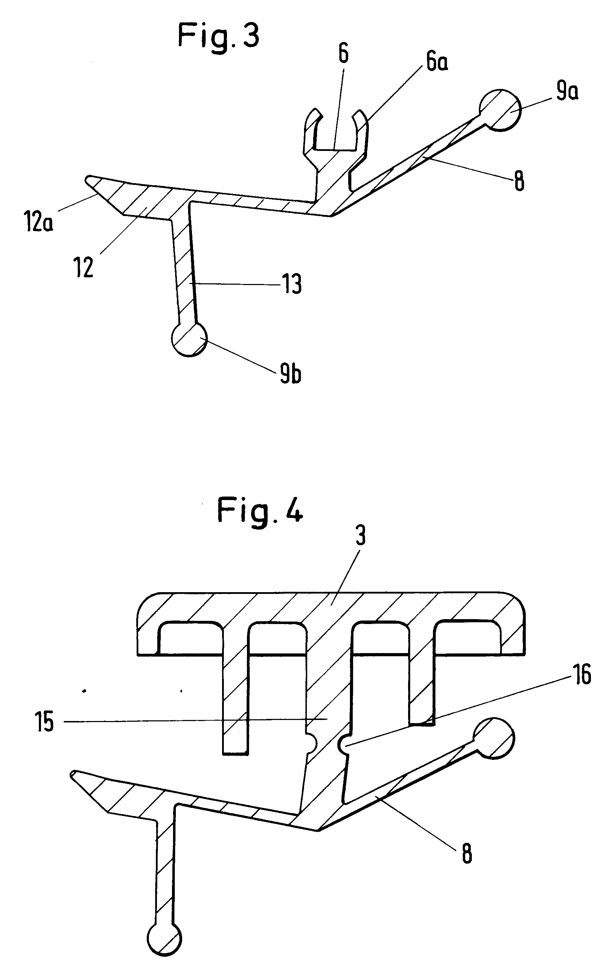

Die in Figur 3 gezeigte Einzeldarstellung des bereits aus Figur 2 ersichtlichen Federelements 7 zeigt den Biegebalken 8 mit daran befindlichen Lageransätzen 9a, b. Diese bestehen bei der erfindungsgemäßen Ausführungsform aus Lagerzapfen, die in entsprechenden Aussparungen der aus Figur 2 ersichtlichen Schwenklager 10 und 11 einliegen. Der am Biegebalken 8 im Bereich des Riegels 12 abzweigende Kragträger 13 ermöglicht die elastische Beweglichkeit des Riegels 12 und bewirkt durch dessen Bewegungsrichtung die Lage des Riegels in der Ent- oder Verriegelungsposition. Im Falle eines über die Tastenaufnahme 6, die mit Klauen 6a versehen ist, auf den Biegebalken 8 ausgeübten Druckes wird dieser durchgebogen, wobei der Kragträger 13, auf die Zeichnung bezogen, eine Schwenkbewegung nach rechts beschreibt und somit der Riegel 12 nach oben bewegt wird. Sobald die Schrägfläche 12a mit der seitlichen Begrenzung 14 des Schiebers 2 abschließt befindet sich die Verriegelungsanordnung in der Entriegelungsposition, die einen Ausschub des Schiebers 2 ermöglicht. Bei Druckentlastung wird aufgrund der am Biegebalken 8 auftretenden Entspannung sowie der nach außen gerichteten Schwenkbewegung des Kragträgers der Riegel 12 wieder ausgeschwenkt und befindet sich somit in seiner Ruhestellung.

Die in Figur 4 dargestellte Ausführungsform der erfindungsgemäßen Verriegelungsanordnung zeigt die Taste 3, die über einen durchgehenden Steg 15 mit dem Biegebalken 8 in Verbindung steht. Am Steg 15 ist ein im Durchmesser verjüngter Abschnitt 16 vorgesehen, wodurch ebenfalls ein elastischer Biegevorgang während der Entriegelung des Schiebers gewährleistet ist.

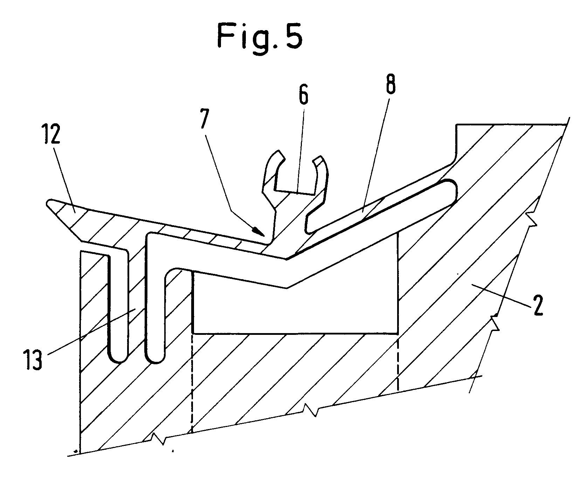

Aus Figur 5 ist eine Ausführungsform der erfindungsgemäßen Verriegelungsanordnung ersichtlich, bei der das Federelement 7 am Gehäuse des Schiebers 2 angespritzt ist. Da auch bei dieser Ausführungsform der Biegebalken 8 sowie der Kragträger 13 federelastisch ausgebildet sind, kann mittels auf die Tastenaufnahme 6 ausgeübten Drucks eine Durchbiegung des Federelements 7 erzielt werden, wodurch der Riegel 12 in eine Entriegelungsposition verbracht werden kann.

## Patentansprüche

1. Aufnahmebehälter für Aufzeichnungsträger wie Magnetbandkassetten, Kompaktdisks oder dgl. mit einem gegen eine Federkraft in ein Gehäuse (1) des Aufnahmebehälters einschiebbaren Schieber (2), der einen Aufzeichnungsträger aufnimmt und der in der eingeschobenen Position mittels einer Verriegelungsanordnung am Gehäuse (1) einrastet, wobei die Verriegelungsanordnung eine an der Frontseite des Schiebers (2) befindliche Taste (3) umfaßt, die gegen ein Federelement zur Betätigung eines Riegels (12) eindrückbar ist, wobei das Federelement (7) aus einem elastischen Biegebalken (8) besteht, an dem der Riegel (12) ausgebildet ist und wobei bei Druck auf die Taste (3) der Biegebalken (8) durchgebogen wird, um den Riegel (12) aus seiner Verriegelungsposition zu verschieben, so daß der Schieber (2) aus dem Gehäuse (1) geschoben wird, **dadurch gekennzeichnet**, daß der Riegel (12) am Ende des Biegebalkens (8) ausgebildet ist und das entgegengesetzte Ende des Biegebalkens (8) am Schieber (2) fixiert ist, und daß der Riegel (12) am Schieber (2) über einen vom Biegebalken (8) abstehenden Kragträger (13) verschiebbar gelagert ist.

2. Aufnahmebehälter nach Anspruch 1, **dadurch gekennzeichnet**, daß an dem dem Riegel (12) entgegengesetzten Ende des Biegebalkens (8) ein Lageransatz (9a) und am freien abstehenden Ende des Kragträgers (13) ein weiterer Lageransatz (9b) ausgebildet ist, die jeweils in ein am Schieber (2) ausgebildetes Schwenklager (10, 11) eingreifen.

3. Aufnahmebehälter nach einem der Ansprüche 1 oder 2, **dadurch gekennzeichnet**, daß der Biegebalken (8) mit der Taste (3) über einen Steg (4, 15) verbunden ist.

4. Aufnahmebehälter nach Anspruch 3, **dadurch gekennzeichnet**, daß der Biegebalken (8) einen stumpfen Winkel beschreibt, wobei der Scheitel des Winkels im Bereich des mit der Taste (3) in Verbindung stehenden Steges (4, 15) liegt.

5. Aufnahmebehälter nach Anspruch 3, **dadurch gekennzeichnet**, daß der Biegebalken (8) mit der Taste (3) über einen durchgehenden Steg (15) verbunden ist, an dem ein im Durchmesser verjüngter Abschnitt (16) vorgesehen ist.

6. Aufnahmebehälter nach Anspruch 3, **dadurch gekennzeichnet**, daß der an der Taste (3) angeordnete Steg (4) in eine am Biegebalken (8) ausgebildete Tastenaufnahme (6) eingreift.

7. Aufnahmebehälter nach Anspruch 6, **dadurch gekennzeichnet**, daß die Tastenaufnahme (6) aus einem am Biegebalken (8) im Bereich der Abwinkelung vorgesehenen, mit Klauen (6a) versehenen Aufnahmelager besteht.

## Claims

1. A storage container for recording media such as magnetic tape cassettes, compact discs or similar media, with a slider member (2) insertable against a spring force into a housing (1) of the storage container, which slider member receives a recording medium and locks at the housing (1) in the inserted position by means of a locking arrangement, the locking arrangement comprising a button (3) located on the front side of the slider member (2), which button is arranged to be pressed in against a spring element to operate a latch (12), the spring element (7) consisting of a resilient flexible bar (8) on which is formed the latch (12), and wherein on pressure on the button (3) the flexible bar (8) flexes in order to displace the latch (12) out of its locking position so that the slider member (2) is pushed out of the housing (1), characterized in that the latch (12) is formed at the end of the flexible bar (8) and the opposite end of the flexible bar (8) is fixed on the slider member (2), and the latch (12) is displaceably mounted on the slider member (2) by way of a side arm (13) projecting from the flexible bar (8).

2. A storage container according to claim 1, characterized in that on the end of the flexible bar (8) opposite the latch (12) there is formed a bearing lug (9a) and on the free projecting end of the side arm (13) there is formed a further bearing lug (b), each of which lugs engages in a respective pivot bearing (10, 11) formed on the slider member (2).

3. A storage container according to one of claims 1 or 2, characterized in that the flexible bar (8) is connected to the button (3) by way of an arm (4, 15).

4. A storage container according to claim 3, characterized in that the flexible bar (8) describes an obtuse angle, the apex of the angle lying in the area of the arm (4, 15) connected to the button (3).

5. A storage container according to claim 3, characterized in that the flexible bar (8) is connected to the button (3) by way of a continuous arm (15) on which a portion (16) of reduced diameter is provided.

6. A storage container according to claim 3, characterized in that the arm (4) arranged on the button (3) engages in a button locating seat (6) formed on the flexible bar (8).

7. A storage container according to claim 6, characterized in that the button locating seat (6) consists of a locating bearing supplied with claws (6a) provided on the flexible bar (8) in the region of the angled section.

## Revendications

1. Réceptacle pour supports d'enregistrement (de signes), tels que cassettes de bandes magnétiques, disques compacts ou articles similaires, ce réceptacle comportant un tiroir (2) susceptible d'être poussé dans un boîtier (1) du réceptacle à l'encontre d'une force de ressort, tiroir qui reçoit et peut loger un support d'enregistrement et qui, dans la position d'enfoncement, s'encliquète sur le boîtier (1) au moyen d'un dispositif de verrouillage, le dispositif de verrouillage comportant une touche (3) qui se trouve du côté avant du tiroir (2) et peut être enfoncée à l'encontre d'un élément élastique destiné à actionner une dent de verrouillage (12), l'élément élastique (7) étant constitué d'une barrette flexible élastique (8) sur laquelle est formée la dent de verrouillage (12) et la barrette flexible (8) fléchissant complètement dans le cas où une poussée est exercée sur la touche (3), afin de déplacer la dent de verrouillage (12) hors de sa position de verrouillage, si bien que le tiroir (2) est poussé hors du boîtier (1), réceptacle caractérisé en ce que la dent de verrouillage (12) est réalisée à l'extrémité de la barrette flexible (8), en ce quel'extrémité opposée de la barrette flexible (8) est fixée sur le tiroir (2), et en ce que la dent de verrouillage (12) est montée sur le tiroir (2), de façon à pouvoir être déplacée, par l'intermédiaire d'un support (13) en porte-à-faux, faisant saillie à partir de la barrette flexible (8).

2. Réceptacle selon la revendication 1, caractérisé en ce qu'à l'extrémité, située à l'opposé de la dent de verrouillage (12), de la barrette flexible (8) est formé un appendice de montage (9a) et qu'à l'extrémité faisant saillie librement du support (13) en porte-à-faux est formé un autre appendice de montage (9b), ces appendices de montage pénétrant chacun dans un palier (10, 11) de pivotement formé sur le tiroir (2).

3. Réceptacle selon l'une des revendications 1 ou 2, caractérisé en ce que la barrette flexible (8) est reliée à la touche (3) par une nervure (4, 15).

4. Réceptacle selon la revendication 3, caractérisé en ce que la barrette flexible (8) forme un angle obtus, le sommet de l'angle étant situé dans la zone de la nervure (4, 15) qui est reliée à la touche (3).

5. Réceptacle selon la revendication 3, caractérisé en ce que la barrette flexible (8) est reliée à la touche ((3) par une nervure (15) formant corps avec elle et pour laquelle est prévu un tronçon (16) de diamètre réduit.

6. Réceptacle selon la revendication 3, caractérisé en ce que la nervure (4), disposée sur la touche (3), pénètre dans un logement (6) pour touche, formé dans la barrette flexible (8).

7. Réceptacle selon la revendication 6, caractérisé en ce que le logement (6) pour touche est constitué d'un support de réception qui est prévu sur la barrette flexible (8) dans la zone de l'angulation et est muni de griffes (6a).
